# EUROPÄISCHE PATENTSCHRIFT

(11) **EP 1 559 635 B1**
(45) Veröffentlichungstag und Bekanntmachung des Hinweises auf die Patenterteilung: **12.07.2006**
(21) Anmeldenummer: 05009650.2
(22) Anmeldetag: 04.12.2001
(51) Int. Cl.: B62D 7/20, B62D 7/16

(54) **Lenkvorrichtung für lenkbare Vorderräder**
Steering arrangement for steerable front wheels
Dispositif de direction pour roues avant dirigeables

(30) Priorität: 09.12.2000 DE 10061408
(43) Veröffentlichungstag der Anmeldung: 03.08.2005
(62) Teilanmeldung aus: 01128782.8
(73) Patentinhaber: ZF FRIEDRICHSHAFEN AG, 88038 Friedrichshafen (DE)
(72) Erfinder: Eickhoff, Mathias, 94081 Fürstenzell (DE)

(56) Entgegenhaltungen:
- DE-A- 2 945 800
- DE-A- 19 619 189

## Beschreibung

Die Erfindung betrifft eine Lenkvorrichtung für lenkbare Vorderräder nach der im Oberbegriff von Anspruch 1 näher definierten Art.

Derartige Lenkvorrichtungen werden vorzugsweise in schweren Nutzkraftfahrzeugen, wie z. B. Lastkraftwagen oder Omnibussen, eingesetzt, wobei aufgrund der hohen Lenkkräfte keine Zahnstangenlenkungen, sondem Schraubengetriebe, verwendet werden. Für Lastkraftwagen mit kurzem vorderen Überhang werden vorzugsweise Starrachsen verwendet, wobei die Schubstange direkt auf den hinteren Lenkhebel wirkt. Reisebusse verwenden eine Einzelradaufhängung, welche aufgrund der längs angeordneten Schubstange einen langen Überhang benötigen.

In der EP 0 806 310 A2 und der DE 196 19 189 A1 ist eine Lenkvorrichtung für ein Nutzkraftfahrzeug offenbart, bei welchem ein Hebelarm, welcher von einem Schraubengetriebe angetrieben wird, auf eine Schubstange wirkt, welche über einen Lenkzwischenhebel, eine Spurstange und einen Lenkhebel auf den Achsschenkel des Vorderrades wirkt. Die Schubstange ist in Fahrzeugrichtung angeordnet, wodurch bei Verwendung dieser Lenkvorrichtung das Nutzfahrzeug einen langen vorderen Überhang benötigt.

In der EP 0 278 095 B1 ist eine Lenkvorrichtung für lenkbare Hinterräder beschrieben, bei welcher die Schubstange über Lenkzwischenhebel auf einen unteren Querlenker des Hinterrades wirkt und somit einen Lenkeinschlag der Hinterräder ermöglicht. Indem der Lenkzwischenhebel auf einen Querlenker wirkt, können nur geringe Lenkeinschläge realisiert werden. Die verwendete Zahnstangenlenkung, welche auf die Schubstange wirkt, ist für die Verwendung im Nutzfahrzeug nicht geeignet, da die dort auftretenden Lenkkräfte nicht bewältigt werden können.

Die Veröffentlichung von Reimpell, Jömsen, Fahrwerkstechnik/Jörnsen Reimpell. - Würzburg: Vogel (Vogel-Fachbuch: Technik: Kraftfahrzeugwesen) Seite 130, Bild 3.5/2 offenbart eine Lenkvorrichtung für lenkbare Vorderräder bei welchem ein Lenkgetriebe eine quer zur Fahrtrichtung vor einer Drehachse der Vorderräder angeordneten Schubstange verschiebt, welche mit einem Lenkhebel verbunden ist, welcher über eine Spurstange welche hinter der Drehachse der Vorderräder liegt, mit dem Lenkhebel des anderen Fahrzeugrades verbunden ist.

Der vorliegenden Erfindung liegt die Aufgabe zugrunde, eine Lenkvorrichtung für lenkbare Vorderräder zu schaffen, welche in einem Nutzfahrzeug mit einer Einzelradaufhängung und kurzem vorderen Überhang verwendet werden kann.

Die Aufgabe wird mit einer, auch die kennzeichnenden Merkmale des Hauptanspruchs aufweisenden, gattungsgemäßen Lenkvorrichtung für lenkbare Vorderräder gelöst.

Erfindungsgemäß ist das Schraubengetriebe vor der Drehachse der Vorderräder so angeordnet, daß die Schubstange im wesentlichen quer zur Fahrtrichtung angeordnet ist. Das Schraubengetriebe der Lenkvorrichtung wirkt über einen Hebelarm auf die Schubstange, welche auf den Lenkzwischenhebel wirkt, welcher dem Schraubengetriebe weiter entfernt angeordnet ist. Jedes Vorderrad ist über einen Lenkhebel und eine Spurstange mit einem Lenkzwischenhebel verbunden und die Lenkzwischenhebel sind über eine Spurstange miteinander verbunden. Das Schraubengetriebe ist so angeordnet, daß der Hebelarm des Schraubengetriebes im wesentlichen quer zur Fahrtrichtung drehbar ist. Das Schraubengetriebe sowie die Schubstange sind vor der Drehachse der Vorderräder angeordnet. Die Querlenker sowie die Spurstangen sind in Fahrzeugrichtung nacheinander angeordnet. Indem die Schubstange quer zur Fahrtrichtung angeordnet und der Hebelarm des Schraubengetriebes im wesentlichen quer zur Fahrtrichtung drehbar ist, kann die Lenkvorrichtung für Nutzfahrzeuge mit kurzem vorderen Überhang verwendet werden. Indem die Querlenker und die Spurstangen sich nicht kreuzen, ist ausreichend Freigang zwischen den Vorderrädern vorhanden. Indem die Schubstange einerseits am Hebelarm des Schraubengetriebes und andererseits an dem Lenkzwischenhebel angeordnet ist, welcher dem Schraubengetriebe weiter entfernt angeordnet ist, kann die Schubstange mit ausreichender Länge ausgeführt werden. Der Lenkhebel ist mit einem Achsschenkel verbunden, welcher die Radkräfte aufnimmt.

Der Achsschenkel ist vorzugsweise über obere und untere Querlenker mit dem Fahrzeugchassis verbunden. Somit ist es möglich, die Stoßstange direkt vor den Vorderrädern anzuordnen.

Weitere Merkmale sind der Figuren-Beschreibung zu entnehmen. Es zeigen:

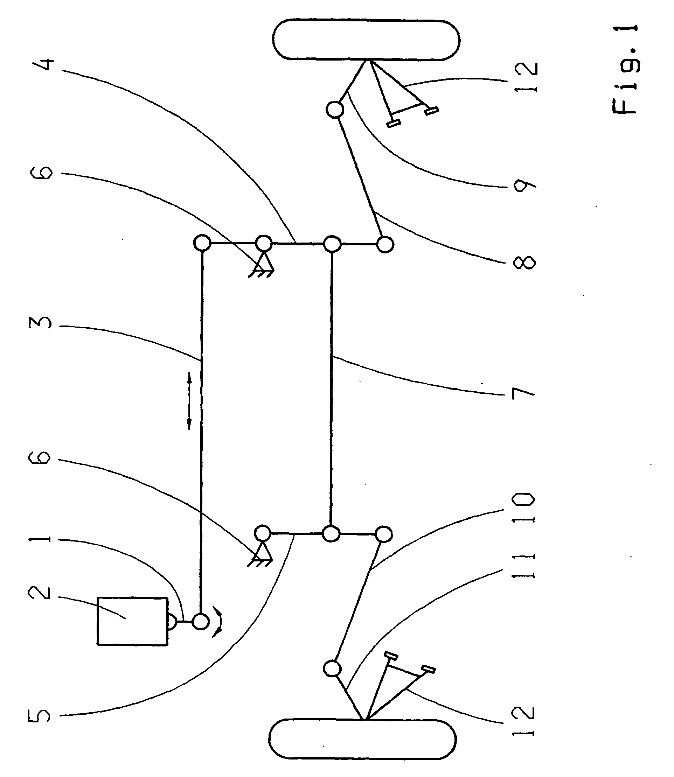

- Fig. 1: eine schematische Darstellung einer Lenkvorrichtung für lenkbare Vorderräder eines Kraftfahrzeuges;

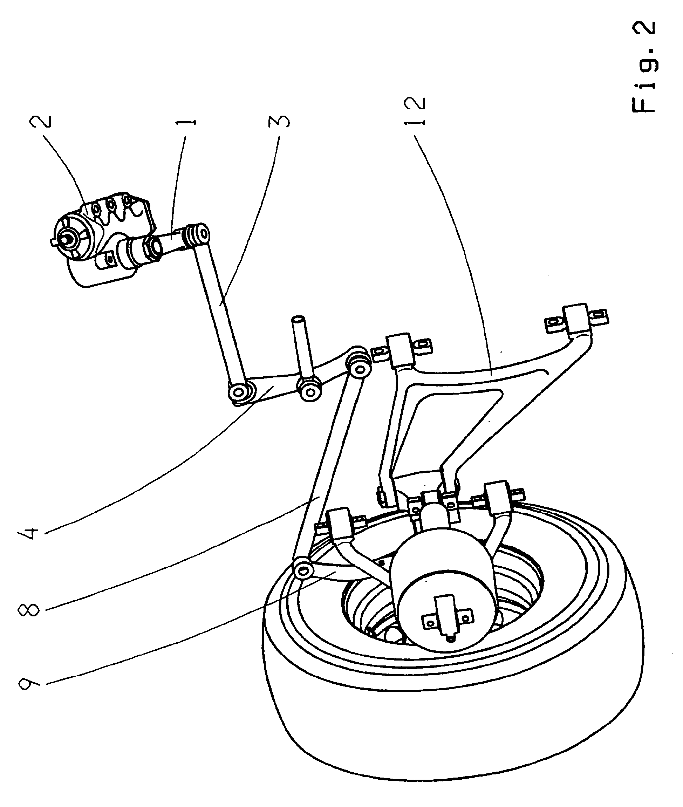

- Fig. 2: eine räumliche Darstellung der Lenkvorrichtung eines Vorderrades und

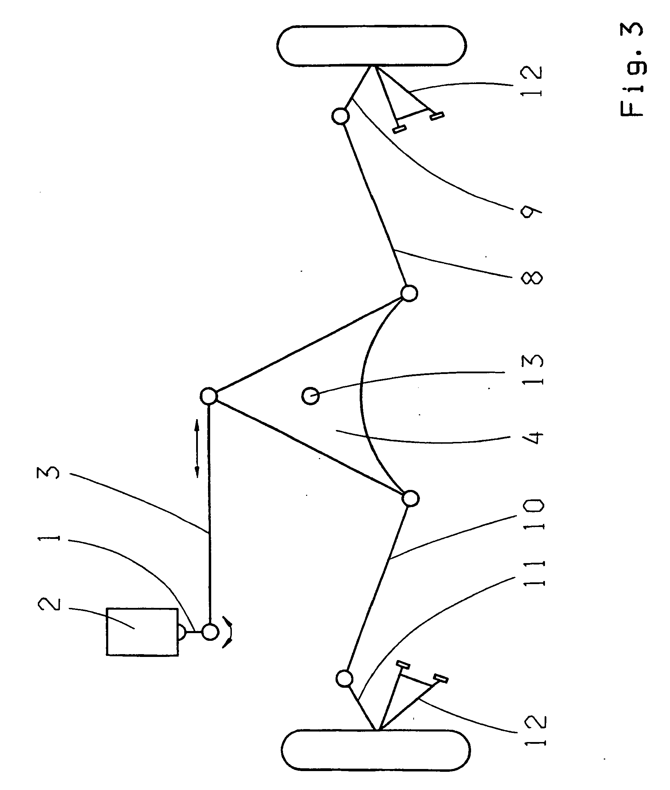

- Fig. 3: eine schematische Darstellung einer Lenkvorrichtung für lenkbare Vorderräder eines Kraftfahrzeuges.

### Fig. 1:

Der Hebelarm 1 eines Schraubengetriebes 2 ist im wesentlichen quer zur Fahrtrichtung drehbar angeordnet. Die Schubstange 3 ist einerseits mit dem Hebelarm 1 und andererseits mit einem Lenkzwischenhebel 4 verbunden. Der Lenkzwischenhebel 4 ist ortsfest, jedoch drehbeweglich, mit dem Fahrzeugchassis 6 verbunden. Die Spurstange 7 verbindet den Lenkzwischenhebel 4 mit dem Lenkzwischenhebel 5. Die Spurstange 8 ist mit dem Lenkzwischenhebel 4 und dem Lenkhebel 9 verbunden. Der Lenkhebel 9 ist mit einem nicht dargestellten Achsschenkel verbunden. Der Lenkzwischenhebel 5 ist einerseits mit dem Fahrzeugchassis 6 und mit der Spurstange 7 und andererseits mit der Spurstange 10 verbunden. Die Spurstange 10 ist über den Lenkhebel 11 mit einem nicht dargestellten Achsschenkel verbunden. Indem die Schubstange 3 im wesentlichen quer zur Fahrtrichtung angeordnet und mit dem Hebelarm 1 und dem Lenkzwischenhebel 4 verbunden und der Hebelarm 1 im wesentlichen quer zur Fahrtrichtung drehbar ist, kann die Lenkvorrichtung für Nutzkraftfahrzeuge mit kurzem vorderen Überhang verwendet werden. Indem sich die Spurstangen 8 und 10 sowie die Lenkhebel 9 und 11 nicht mit den unteren Querlenkern 12 kreuzen, ist ausreichend Freigang zum Motortunnel vorhanden.

### Fig. 2:

Der Hebelarm 1 des Schraubengetriebes 2 ist mit der Schubstange 3 verbunden. Die Schubstange 3 ist über den Lenkzwischenhebel 4 und die Spurstange 8 mit dem Lenkhebel 9 verbunden. Der Lenkhebel 9 sowie die Spurstange 8 sind in Fahrtrichtung vor dem Querlenker 12 angeordnet, so daß, da sich der Querlenker 12 und die Spurstange 8 nicht kreuzen, ausreichend Freigang zwischen den Vorderrädern vorhanden ist.

### Fig. 3:

Der Hebelarm 1 eines Schraubengetriebes 2 ist im wesentlichen quer zur Fahrtrichtung drehbar angeordnet. Die Schubstange 3 ist einerseits mit dem Hebelarm 1 und andererseits mit einem Lenkzwischenhebel 4 verbunden. Der Lenkzwischenhebel 4 ist ortsfest, jedoch drehbeweglich, mit dem Fahrzeugchassis 6 verbunden. Der Lenkzwischenhebel 4 weist einen Drehpunkt 13 auf, welcher mittig angeordnet ist und um welchen sich der Lenkzwischenhebel 4 drehen kann. Die Spurstange 8 verbindet den Lenkzwischenhebel 4 mit dem Lenkhebel 9. Die Spurstange 10 verbindet den Lenkzwischenhebel 4 mit dem Lenkhebel 11. Der Lenkhebel 10 und der Lenkhebel 11 sind mit nicht dargestellten Achsschenkeln verbunden.

### Bezugszeichen

- 1: Hebelarm
- 2: Schraubengetriebe
- 3: Schubstange
- 4: Lenkzwischenhebel
- 5: Lenkzwischenhebel
- 6: Fahrzeugchassis
- 7: Spurstange
- 8: Spurstange
- 9: Lenkhebel
- 10: Spurstange
- 11: Lenkhebel
- 12: Querlenker
- 13: Drehpunkt

## Patentansprüche

1. Lenkvorrichtung für lenkbare Vorderräder eines Kraftfahrzeuges mit einem Schraubengetriebe (2), welches über einen Hebelarm (1) auf eine Schubstange (3) und diese auf einen Lenkzwischenhebel (4) wirkt, welcher über eine Spurstange (8) auf einen Lenkhebel wirkt, welcher mit einem Achsschenkel eines Vorderrades verbunden ist, **dadurch gekennzeichnet, daß** jedes Vorderrad über seinen Achsschenkel und seinen Lenkhebel (9, 11) und seine Spurstange (8, 10) mit einem Lenkzwischenhebel (4) verbunden ist, wobei der Lenkzwischenhebel (4) direkt mit der Schubstange (3) verbunden ist, der Lenkzwischenhebel um einen mittigen Drehpunkt (13) drehbar ist und die Schubstange (3) im wesentlichen quer zur Fahrtrichtung vor einer Drehachse der Vorderräder angeordnet und einerseits mit dem Hebelarm (1) des Schraubengetriebes (2) und andererseits mit dem Lenkzwischenhebel (4) verbunden ist.

## Claims

1. The invention relates to a steering system for the steerable front wheels of a motor vehicle with a helical gear (2), which - via a lever arm (1) - acts on a pushrod (3), which acts on a steering idler arm (4), which - via a steering tie rod (8) - acts on a pitman arm, which is linked to a steering knuckle of a front wheel, **characterized in that** each front wheel - via its steering knuckle and its pitman arm (9, 11) and its steering tie rod (8, 10) - is linked to a steering idler arm (4), with the steering idler arm (4) being directly linked to the pushrod (3) and rotatable around a central rotation point (13), and with the pushrod (3) being arranged essentially at right angles to the direction of travel in front of an axis of rotation of the front wheels and linked to the lever arm (1) of the helical gear (2) on the one hand and to the steering idler arm (4) on the other hand.

## Revendications

1. Dispositif de direction pour roues avant orientables d'un véhicule automobile, comprenant un mécanisme à vis (2) qui agit par l'intermédiaire d'un bras de levier (1) sur une bielle (3), cette dernière agissant sur un levier intermédiaire de direction (4), lequel agit par l'intermédiaire d'un levier d'accouplement (8) sur un levier de direction qui est relié à une fusée d'une roue avant, **caractérisé en ce que** chaque roue avant est reliée à un levier intermédiaire de direction (4) par l'intermédiaire de sa fusée et de son levier de direction (9, 11), ainsi que de sa barre d'accouplement (8, 10), le levier intermédiaire de direction (4) étant relié directement à la bielle (3), le levier intermédiaire de direction pouvant tourner autour d'un point de rotation central (13), et la bielle (3) étant disposée sensiblement transversalement à la direction de la marche, avant un axe de rotation des roues avant et étant reliée, d'une part, au bras de levier (1) du mécanisme à vis (2) et, d'autre part, au levier intermédiaire de direction (4).
